# EUROPÄISCHE PATENTSCHRIFT

(11) **EP 3 024 130 B1**
(45) Veröffentlichungstag und Bekanntmachung des Hinweises auf die Patenterteilung: **02.08.2017**
(21) Anmeldenummer: 14003931.4
(22) Anmeldetag: 21.11.2014
(51) Int. Cl.: H02M 3/158, H02J 1/00

(54) **DC/DC-Wandlereinrichtung**
DC/DC converter
Dispositif convertisseur à courant continu

(43) Veröffentlichungstag der Anmeldung: 25.05.2016
(73) Patentinhaber: Brusa Elektronik AG, 9466 Sennwald (CH)
(72) Erfinder: Schiedermeier, Max, 9466 Sennwald (CH); Friewald, Kai, 6800 Feldkirch (AT); Illiano, Enzo, 6900 Lugano (CH)
(74) Vertreter: Rösler, Frank

(56) Entgegenhaltungen:
- THOUNTHONG P ET AL: "Fuel cell high-power applications", IEEE INDUSTRIAL ELECTRONICS MAGAZINE, IEEE, US, Bd. 3, Nr. 1, 1. März 2009 (2009-03-01), Seiten 32-46, XP011280986, ISSN: 1932-4529, DOI: 10.1109/MIE.2008.930365
- SCHALTZ E ET AL: "Non-inverting buck-boost converter for fuel cell applications", INDUSTRIAL ELECTRONICS, 2008. IECON 2008. 34TH ANNUAL CONFERENCE OF IEEE, IEEE, PISCATAWAY, NJ, USA, 10. November 2008 (2008-11-10), Seiten 855-860, XP031825531, ISBN: 978-1-4244-1767-4

## Beschreibung

Die Erfindung betrifft eine mehrphasige DC/DC-Wandlereinrichtung mit einem Gleichspannungseingang, einem Gleichspannungsausgang und parallel geschalteten Gleichspannungswandlern, die jeweils zumindest ein von einer Steuereinrichtung gesteuertes Schaltelement aufweisen. Die Erfindung betrifft auch ein Energieübertragungssystem und ein Fahrzeug, jeweils mit einer DC/DC-Wandlereinrichtung und ein Verfahren zum Betreiben dieser Gegenstände.

Die DE102011051482A1 offenbart eine Brückenschaltungsanordnung und ein Betriebsverfahren für einen Spannungswandler, der aus zwei Halbbrückenanordnungen gebildet wird. Drei, außerhalb der Halbbrückenanordnungen vorgesehene Umschaltelemente dienen zur Umschaltung zwischen einer ersten Konfiguration, in der die Halbbrückenanordnungen parallel geschaltet mit den Eingangsanschlüssen verbunden sind, und einer zweiten Konfiguration, in der die Halbbrückenanordnungen zwischen den Eingangsanschlüssen in Serie geschaltet sind. Bei hoher Eingangsspannung wird die Serienschaltung der Halbbrücken verwendet, damit sich die Spannung auf beide Halbbrücken aufteilt. Bei geringerer Eingangsspannung wird die Brückenschaltungsanordnung mit parallel geschalteten Halbbrücken betrieben. Der Spannungswandler umfasst weiters ein Resonanznetzwerk einen Übertrager und einen Gleichrichter. Diese Brückenschaltung zielt darauf ab, die Spannungsfestigkeit der Elektronik zu erhöhen. Nachteilig an dieser Topologie sind insbesondere die Beschränkung auf zwei Halbbrücken sowie die drei Umschaltelemente, die einen hohen Schaltungsaufwand bedingen und als Halbleiter einen nicht unbeträchtlichen Kostenanteil darstellen.

Die DE102007017187B4 offenbart ein Bordnetz für ein Kraftfahrzeug mit einer Fahrzeugbatterie, einem Superkondensator, einem spannungssensiblen Verbraucher, einem ersten und mindestens einem zweiten DC/DC-Wandler sowie einem elektronischen Schalter. Mit ihren ersten Anschlüssen sind die DC/DC-Wandler jeweils mit dem Superkondensator verbunden. Der zweite Anschluss des ersten Wandlers ist mit dem Verbraucher verbunden. Der zweite Anschluss des zweiten Wandlers ist mit der Fahrzeugbatterie verbunden. Der elektronische Schalter ist zwischen den zweiten Anschlüssen der DC/DC-Wandler geschaltet. Durch das Öffnen des elektronischen Schalters wird sichergestellt, dass der sensible Verbraucher während des Startvorganges nur aus dem Superkondensator mit Energie versorgt wird. Ein Spannungseinbruch auf dem Abschnitt des Bordnetzes, an dem die Fahrzeugbatterie und der Starter hängen, berührt daher den spannungssensiblen Verbraucher nicht. Außerhalb eines Startvorganges wird der Schalter geschlossen, sodass beide DC/DC-Wandler zum Aufladen des Superkondensators genutzt werden. Zur Begrenzung des Ladestromes kann in jedem DC/DC-Wandler ein weiterer Schalter vorgesehen sein. Alle DC/DC-Wandler weisen dieselbe Topologie auf.

Die JP2006311776A offenbart ein Brennstoffzellenfahrzeug mit einem aus mehreren parallel geschalteten Untereinheiten bestehenden Wandler. Eine Steuereinheit bestimmt in Abhängigkeit des Zustandes (z.B. Temperatur) der jeweiligen Untereinheiten, welche Untereinheit(en) betrieben werden.

Die DE102010041625A1 offenbart einen elektrischen Wandler für eine mobile Anwendung. Der Gleichspannungswandler besteht aus parallel geschalteten Einzelwandlern. Die Steuerungseinrichtung führt im Betrieb des Wandlers einen aktiven Stromausgleich durch. Dafür werden die Werte für den Stromfluss durch die momentan im Betrieb befindlichen Einzelwandler erfasst. Außerdem kann der Ausfall eines Einzelwandlers kompensiert werden.

Die US6954365B2 offenbart ein Brennstoffzellenfahrzeug mit parallel geschalteten DC/DC-Konvertern, die jeweils eine Strommesseinrichtung, umfassen können. Die Ansteuerung bzw. zeitversetzte Ansteuerung der einzelnen DC/DC-Konverter erfolgt mittels einer Steuereinheit.

Die DE112008003489T5 offenbart ein Brennstoffzellensystem, bei dem zwischen Brennstoffzelle und Batterie ein DC/DC-Wandler vorgesehen ist. Dieser besteht aus drei Vollbrücken-Einheiten, deren Spulen untereinander induktiv gekoppelt sind.

Die US7518886B1 offenbart eine Brennstoffzellenanordnung mit einem aus Primär- und Sekundärseite bestehenden Wandler. Die Primärseite wird aus drei gleichartigen, parallel geschalteten Phasen gebildet. Die Sekundärseite umfasst einen gemeinsamen Gleichrichter.

Die DE102012109638A1 offenbart einen Multistring-Wechselrichter mit eingangsseitigem EMV-Filter.
umfassen können. Die Ansteuerung bzw. zeitversetzte Ansteuerung der einzelnen DC/DC-Konverter erfolgt mittels einer Steuereinheit.

Die DE112008003489T5 offenbart ein Brennstoffzellensystem, bei dem zwischen Brennstoffzelle und Batterie ein DC/DC-Wandler vorgesehen ist. Dieser besteht aus drei Vollbrücken-Einheiten, deren Spulen untereinander induktiv gekoppelt sind.

Die US7518886B1 offenbart eine Brennstoffzellenanordnung mit einem aus Primär- und Sekundärseite bestehenden Wandler. Die Primärseite wird aus drei gleichartigen, parallel geschalteten Phasen gebildet. Die Sekundärseite umfasst einen gemeinsamen Gleichrichter.

Die DE102012109638A1 offenbart einen Multistring-Wechselrichter mit eingangsseitigem EMV-Filter.

Im Stand der Technik sind Gleichspannungswandler für überlappende Spannungsbereiche, insbesondere einer am Wandlereingang anliegenden Energiequelle (z.B. Brennstoffzelle) und einem am Wandlerausgang anliegenden Energiespeicher (Fahrzeugbatterie) bekannt. Beispiele dafür finden sich in Thounthong et al: "Fuel cell high-power applications", IEEE Bd. 3, Nr. 1, 1. März 2009, Seiten 32 bis 45, oder etwa in Schaltz et al: "Non-inverting buck-boost converter for fuel cell applications", Industrial Electronics, 2008, IECON 2008, 34th Annual Conference of IEEE, 10. November 2008, Seiten 855 bis 860.

Im Falle, dass die Eingangsspannung (Brennstoffzellenspannung) höher oder tiefer als die Ausgangsspannung (Batteriespannung) sein kann, ist die gebräuchliche Wandler-Topologie der Vollbrückenwandler. Unter anderem um die Leistung zu verteilen, werden dabei mehrere Vollbrückenwandler parallel betrieben.

Nachteilig an diesem Stand der Technik ist, dass eine Vielzahl an Halbleiterschaltern und entsprechende Ansteuerlogik erforderlich sind. Der Berechnungsaufwand durch Mikrokontroller, FPGA, CPLD, ASIC od. ähnl. Ist ebenfalls enorm. Dies wirkt sich nachteilig auf Bauraum, Gewicht, Kosten und Wirkungsgrad (hohe Verlustleistung) aus. Zudem sind bekannte Systeme nicht bzw. nicht optimal an die Strom-Spannungs-Kennlinie einer Energiequelle, insbesondere einer Brennstoffzelle angepasst bzw. und dass die DC/DC-Wandlereinrichtung zumindest eine, vorzugsweise gesonderte Schalteinrichtung mit
einem ersten Schaltzustand, in dem der zumindest eine zweite Gleichspannungswandler abgekoppelt ist, sodass eine Spannungswandlung zwischen Gleichspannungseingang und Gleichspannungsausgang durch den zumindest einen ersten Gleichspannungswandler und ohne Beteiligung des zumindest einen zweiten Gleichspannungswandlers erfolgt, und
einem zweiten Schaltzustand, in dem der zumindest eine zweite Gleichspannungswandler zugeschaltet ist, sodass der zumindest eine zweite Gleichspannungswandler an einer Spannungswandlung zwischen Gleichspannungseingang und Gleichspannungsausgang beteiligt ist, vorzugsweise unter gleichzeitiger Beteiligung des zumindest einen ersten Gleichspannungswandlers,

### umfasst.

Mit der Erfindung wird eine optimierte Lösung insbesondere für Situationen erreicht, bei denen die Differenz zwischen der am Eingang der DC/DC-Wandereinrichtung anliegenden Spannung und der am Ausgang der DC/DC-Wandereinrichtung das Vorzeichen wechselt. Eine solche Situation ergibt sich insbesondere, wenn eine Brennstoffzelleneinheit mit dem Eingang der DC/DC-Wandereinrichtung verbunden ist und ein Energiespeicher (z.B. Batterie) mit dem Ausgang der DC/DC-Wandereinrichtung verbunden ist. Die Strom-Spannungskennlinie bzw. Polkurve einer Brennstoffzelleneinheit ist ausgehend von der Leerlaufspannung zunächst durch einen stark abfallenden Abschnitt gekennzeichnet. Üblicherweise unterschreitet die Brennstoffzellenspannung die Batteriespannung in bzw. nach diesem abfallenden Abschnitt, sodass vom Tief- in den Hochsetzstellbetrieb gewechselt (bzw. das Wandlungsverhältnis angepasst) werden muss.

Der Gleichspannungseingang der DC/DC-Wandlereinrichtung dient somit zur Anbindung an eine elektrische Energiequelle, insbesondere eine Brennstoffzelleneinheit, und der Gleichspannungsausgang zur Anbindung an einen elektrischen Energiespeicher.

Unter 'Zuschalten' ist zu verstehen, dass der zumindest eine zweite Gleichspannungswandler derart zwischen Eingang und Ausgang geschaltet wird, dass er an der Spannungswandlung zwischen Eingang und Ausgang beteiligt sein kann. Unter 'Abkoppeln' ist somit das Gegenteil zu verstehen. Im abgekoppelten Zustand ist der zumindest eine zweite Gleichspannungswandler nicht an der Spannungswandlung beteiligt.

Der erste Schaltzustand der Schalteinrichtung entspricht einem ersten Betriebsmodus, bei dem die Spannungswandlung durch den zumindest einen ersten Gleichspannungswandler (Tiefsetzstellbetrieb) und ohne Beteiligung des zumindest einen zweiten Gleichspannungswandlers erfolgt.

Der zweite Schaltzustand der Schalteinrichtung entspricht einem zweiten Betriebsmodus, bei dem der zumindest eine zweite Gleichspannungswandler an der Spannungswandlung beteiligt ist. Für diesen zweiten Betriebsmodus gibt es nun zwei Varianten:
In einer ersten Variante erfolgt die Spannungswandlung zwischen Gleichspannungseingang und Gleichspannungsausgang durch den zumindest einen ersten Gleichspannungswandler (Hochsetzstellbetrieb) und den zumindest einen zweiten Gleichspannungswandler.

In einer zweiten Variante erfolgt die Spannungswandlung zwischen Gleichspannungseingang und Gleichspannungsausgang nur durch den oder die zweiten Gleichspannungswandler und ohne Beteiligung des ersten Gleichspannungswandlers.

Die erste Variante des zweiten Betriebsmodus kann z.B. nach dem Zuschalten des zumindest einen zweiten Gleichspannungswandlers gefahren werden. Nach einer vorgegebenen Zeitspanne wird/werden der oder die ersten Gleichspannungswandler heruntergefahren, sodass der durch den/die ersten Gleichspannungswandler fließende Strom verringert wird, bis der zumindest eine erste Gleichspannungswandler gänzlich außer Betrieb gesetzt ist (d.h. seine Schaltelemente takten nicht mehr). Gleichzeitig übernimmt der zumindest eine zweite Gleichspannungswandler die freiwerdende Stromlast, indem die Taktung seiner Schaltelemente entsprechend angepasst wird. Nun wird die zweite Variante des zweiten Betriebsmodus gefahren (d.h. ohne Beteiligung des zumindest einen ersten Gleichspannungswandlers an der Spannungswandlung).

Der Wechsel von der ersten Variante zur zweiten Variante kann dann sinnvoll sein, wenn die Verluste durch ein - während des Hochsetzstellbetriebes dauerhaft geschlossenes - Schaltelement des ersten Gleichspannungswandlers größer sind als die Verluste durch die Schalteinrichtung. Die zweite Variante des zweiten Betriebsmodus kann auch als 'Hocheffizienzmodus' bezeichnet werden. Er eignet sich insbesondere, wenn mehrere zweite Gleichspannungswandler zur Verfügung stehen.

Die Erfindung beruht auf dem Prinzip, dass der zumindest eine zweite Gleichspannungswandler abkoppelbar bzw. wegschaltbar ist, d.h. er kann durch die Schalteinrichtung von dem zumindest einen ersten Gleichspannungswandler abgekoppelt werden und ist in diesem (ersten) Schaltzustand nicht an der Gleichspannungswandlung beteiligt. Die Wandlung erfolgt in diesem ersten Schaltzustand ausschließlich durch den zumindest einen ersten Gleichspannungswandler. Durch das gezielte Zuschalten des/der zweite(n) Gleichspannungswandler kann der Strom-Spannungs-Kennlinie einer Energiequelle bestmöglich entsprochen werden.

Unter dem Ausdruck "mehrphasig" wird verstanden, dass die DC/DC-Wandlereinrichtung zumindest zwei Phasen aufweist, d.h. aus zumindest zwei parallel geschalteten Gleichspannungswandlern gebildet wird. Der zumindest eine erste Gleichspannungswandler und der zumindest eine zweite Gleichspannungswandler sind dabei zwischen Eingang und Ausgang der DC/DC-Wandlereinrichtung parallel geschaltet.

Unter "gesonderter Schalteinrichtung" ist zu verstehen, dass diese nicht Bestandteil der einzelnen ersten und zweiten Gleichspannungswandler ist, sondern eben zusätzlich zu diesen vorgesehen ist. Die gesonderte Schalteinrichtung kann ebenso von der Steuereinrichtung ansteuerbar sein.

Ein wichtiges Merkmal der Erfindung besteht darin, dass der bzw. die erste(n) Gleichspannungswandler eine unterschiedliche Topologie aufweist/-en (d.h. unterschiedlich aufgebaut ist/sind) als der bzw. die zweite(n) Gleichspannungswandler.

Der erste Gleichspannungswandler wird - vom Eingang zum Ausgang hin - somit in zwei verschiedenen Betriebsmodi eingesetzt: im Tiefsetzstell- und im Hochsetzstellbetrieb. Der zweite Gleichspannungswandler kann hingegen nur für einen Betriebsmodus ausgelegt sein, nämlich für den Hochsetzstellbetrieb (vom Eingang zum Ausgang hin betrachtet), wodurch er wesentlich einfacher, kompakter und kostengünstiger dimensioniert werden kann.

Im Zusammenhang mit der Polkurve einer Brennstoffzelle fungiert der erste Gleichspannungswandler ausgehend von der Leerlaufspannung zunächst als Tiefsetzsteller (sog. Pull-Down-Phase). Der Strom ist in diesem Bereich noch gering, sodass die Last durch den/die erste(n) Gleichspannungswandler noch verlustarm getragen werden kann. Sobald die Brennstoffzellenspannung gleich groß bzw. kleiner wird als die Spannung des Energiespeichers, kann auch der bzw. die zweite(n) Gleichspannungswandler dazu geschaltet werden (d.h. an der Spannungswandlung beteiligt werden). Der Strom wird auf diese Weise auf mehrere Wandler verteilt. Der/die erste(n) Gleichspannungswandler wirken nun - wie der/die zweite(n) Gleichspannungswandler - als Hochsetzsteller.

Der/die ersten Gleichspannungswandler sind gleichzeitig Tief- und Hochsetzsteller, d.h. sie sind derart konzipiert, dass sie sowohl im Tiefsetz- als auch im Hochsetzbetrieb gefahren werden können. Ein wichtiger Vorteil der Erfindung besteht darin, dass der/die zweite(n) Gleichspannungswandler - in Richtung vom Eingang zum Ausgang hin - nur als Hochsetzsteller konzipiert sein können, wodurch sie wesentlich einfacher und kostengünstiger dimensioniert werden können.

An dieser Stelle sei erwähnt, dass die Begriffe "Gleichspannungseingang" und "Gleichspannungsausgang" dazu verwendet wurden, um die Richtung des Tief- bzw. Hochsetzstellbetriebes zu definieren. Es wäre jedoch auch möglich, die Gleichspannungswandler bidirektional auszubilden, sodass eine am Gleichspannungsausgang anliegende Spannung in Richtung Gleichspannungseingang gewandelt wird. Der/die zweite(n) Gleichspannungswandler könnten dann - vom Ausgang in Richtung Eingang hin - als Tiefsetzsteller fungieren.

An dieser Stelle sei erwähnt, dass der/die zweite(n) Gleichspannungswandler als Ganze weg- bzw. zugeschaltet werden, d.h. es erfolgt im weggeschalteten Zustand keine Kombination bzw. Vereinigung mit der Topologie des ersten Gleichspannungswandlers.

Eine bevorzugte Ausführungsform zeichnet sich dadurch aus, dass der zweite Gleichspannungswandler eine einfachere Topologie aufweist als der erste Gleichspannungswandler und/oder dass der zweite Gleichspannungswandler weniger, vorzugsweise halb so viele, Schaltelemente aufweist als bzw. wie der erste Gleichspannungswandler. Dadurch kann insbesondere die Zahl der verwendeten Halbleiterbauteile reduziert werden, wodurch Bauraum, Gewicht und Kosten reduziert werden können.

Eine bevorzugte Ausführungsform zeichnet sich dadurch aus, dass der zumindest eine zweite Gleichspannungswandler aufgrund seiner Topologie in Richtung vom Gleichspannungseingang zum Gleichspannungsausgang hin nur einen Hochsetzstellbetrieb aufweist. Der/die zweiten Gleichspannungswandler können damit wesentlich einfacher und kostengünstiger dimensioniert werden als der erste Gleichspannungswandler. Diese Ausführungsform schließt nicht aus, dass der/die zweiten Gleichspannungswandler bidirektional ausgebildet ist/sind (d.h. in entgegengesetzter Richtung als Tiefsetzsteller wirken können).

Eine bevorzugte Ausführungsform zeichnet sich dadurch aus, dass der zumindest eine erste Gleichspannungswandler ein Vollbrücken-Wandler ist und/oder dass der zumindest eine zweite Gleichspannungswandler ein Halbbrücken-Wandler ist. Dies stellt eine besonders bevorzugte Variante dar, da einerseits der Vollbrückenwandler gleichermaßen für Tief- und Hochsetzstellbetrieb geeignet ist und andererseits ein Halbbrückenwandler als Hochsetzsteller dieselbe Performance aufweist wie ein Vollbrückenwandler im Hochsetzstellbetrieb, aber nur halb so viele Halbleiterschaltelemente benötigt.

Eine bevorzugte Ausführungsform zeichnet sich dadurch aus, dass im ersten Schaltzustand der Schalteinrichtung der zumindest eine zweite Gleichspannungswandler mit zumindest einem seiner Pole von dem Gleichspannungseingang und/oder dem Gleichspannungsausgang und von dem zumindest einen ersten Gleichspannungswandler abgekoppelt ist. Es reicht somit auch, wenn das Abkoppeln nur durch Auftrennung eines Poles erfolgt.

Eine bevorzugte Ausführungsform zeichnet sich dadurch aus, dass eine einzige Schalteinrichtung zum Abkoppeln bzw. Zuschalten eines zweiten Gleichspannungswandlers vorgesehen ist. Dadurch wird der Schaltungsaufwand gering gehalten.

Möglich wäre auch, dass jeder zweiter Gleichspannungswandler oder Gruppen von zweiten Gleichspannungswandlern jeweils durch eine eigene Schalteinrichtung an- bzw. abkoppelbar sind.

Vorzugsweise handelt es sich bei der Erfindung um galvanisch verbindende (d.h. nicht um durch einen Transformator galvanisch getrennte) Wandler, d.h. Eingang und Ausgang sind galvanisch miteinander verbunden.

Eine bevorzugte Ausführungsform zeichnet sich dadurch aus, dass unabhängig von den Schaltzuständen der Schaltelemente der Gleichspannungswandler zwischen einem Pol des Gleichspannungseingangs und dem gleichnamigen Pol des Gleichspannungsausgangs eine galvanische Verbindung ausgebildet ist, die vorzugsweise frei von induktiven Bauelementen, besonders bevorzugt frei von jeglichen aktiven und passiven elektrischen Bauelementen, ist. Eine derartige Wandlertopologie kann einfach und kostengünstig realisiert werden und ist verlustarm.

Eine bevorzugte Ausführungsform zeichnet sich dadurch aus, dass der erste Gleichspannungswandler und/oder der zweite Gleichspannungswandler zumindest ein Halbleiter-Schaltelement, insbesondere einen IGBT oder MOSFET, und zumindest eine Drossel aufweist.

Eine bevorzugte Ausführungsform zeichnet sich dadurch aus, dass zumindest einer der Gleichspannungswandler transformatorisch gekoppelte Drosseln aufweist, wodurch sich der Wirkungsgrad erhöhen lässt.

Eine bevorzugte Ausführungsform zeichnet sich dadurch aus, dass die DC/DC-Wandlereinrichtung zumindest eine Strom- und/oder Spannungsmesseinrichtung umfasst, die mit der Steuereinrichtung verbunden und derart ausgebildet ist, dass die Ansteuerung der Schalteinrichtung in Abhängigkeit der mit der Strom- und/oder Spannungsmesseinrichtung ermittelten Messwerte erfolgt. Die Schalteinrichtung ist bevorzugt ebenfalls mit der Steuereinrichtung verbunden. Es ergibt sich eine automatische und zuverlässige Steuerung der gesamten DC/DC-Wandlereinrichtung.

Das erwähnte Ziel wird auch mit einem Energieübertragungssystem gelöst, das eine elektrische Energiequelle, insbesondere eine Brennstoffzelleneinheit, einen elektrischen Energiespeicher, insbesondere eine Batterie, und eine erfindungsgemäße DC/DC-Wandlereinrichtung umfasst, wobei die elektrische Energiequelle und der elektrische Energiespeicher über die DC/DC-Wandlereinrichtung miteinander elektrisch verbunden sind. Dabei ist die elektrische Energiequelle mit dem Gleichspannungseingang und der Energiespeicher mit dem Gleichspannungsausgang der DC/DC-Wandlereinrichtung verbunden. An die Vorzüge insbesondere im Zusammenhang mit einem Brennstoffzellensystem wurde bereits weiter oben näher eingegangen.

Das erwähnte Ziel wird auch mit einem Fahrzeug, insbesondere Brennstoffzellenfahrzeug, mit einem erfindungsgemäßen Energieübertragungssystem gelöst.

Das erwähnte Ziel wird auch mit einem Verfahren zum Betrieb einer DC/DC-Wandlereinrichtung und/oder eines Energieübertragungssystems und/oder eines Fahrzeuges gelöst, wobei
die DC/DC-Wandlereinrichtung in einem ersten Betriebsmodus betrieben wird, wenn die am Gleichspannungseingang anliegende Spannung größer ist als die am Gleichspannungsausgang anliegende Spannung, wobei in dem ersten Betriebsmodus der zumindest eine erste Gleichspannungswandler in einem Tiefsetzstellbetrieb gefahren wird und die Schalteinrichtung den ersten Schaltzustand, in dem der zumindest eine zweite Gleichspannungswandler abgekoppelt ist, einnimmt,
und wobei die DC/DC-Wandlereinrichtung in einem zweiten Betriebsmodus betrieben wird, wenn die am Gleichspannungseingang anliegende Spannung kleiner ist als die am Gleichspannungsausgang anliegende Spannung, wobei in dem zweiten Betriebsmodus die Schalteinrichtung den zweiten Schaltzustand, in dem der zumindest eine zweite Gleichspannungswandler zugeschaltet ist, einnimmt und vorzugsweise der zumindest eine erste Gleichspannungswandler in einem Hochsetzstellbetrieb gefahren wird.

Auch das oben definierte Verfahren umfasst im zweiten Betriebsmodus die - bereits oben beschriebene - erste und zweite Variante.

In der ersten Variante sind der zumindest eine zweite Gleichspannungswandler und der zumindest eine erste Gleichspannungswandler in Betrieb (Hochsetzstellbetrieb) und an der Spannungswandlung beteiligt. In der zweiten Variante ist der zumindest eine erste Gleichspannungswandler außer Betrieb gesetzt (d.h. er trägt nicht zur Spannungswandlung bei.

Bevorzugt erfolgt das Zuschalten und/oder Abkoppeln des zumindest einen zweiten Gleichspannungswandlers mittels der Schalteinrichtung, sobald die am Gleichspannungseingang anliegende Spannung gleich groß oder um einen vorgegebenen Betrag kleiner ist als die am Gleichspannungsausgang anliegende Spannung.

Bevorzugt erfolgt das Schalten der Schalteinrichtung im Wesentlichen lastfrei, indem vorzugsweise der durch die Schalteinrichtung fließende Strom durch den zumindest einen zweiten Gleichspannungswandler reguliert wird. So kann der durch den zweiten Gleichspannungswandler fließende Strom durch das Taktmuster seiner Schaltelemente verringert werden. Gleichzeit nimmt der zumindest eine erste Gleichspannungswandler mehr Strom auf (ebenfalls durch Änderung des Taktmusters seiner Schaltelemente). Ein Schalten der Schalteinrichtung in den ersten Schaltzustand erfolgt somit vorzugsweise erst dann, wenn der Strom durch die Schalteinrichtung im Wesentlichen Null beträgt. Möglich ist auch, dass die Schaltelemente des zweiten Gleichspannungswandler bereits vor dem Schaltvorgang (vom ersten in den zweiten Schaltzustand) in Betrieb genommen werden, um eine Anpassung von Ausgangs- zu Eingangsspannung vorzunehmen, sodass der durch die Schalteinrichtung fließende Strom zu null oder zumindest gering gehalten wird. Stützkapazitäten zwischen Schalteinrichtung und zweiten Gleichspannungswandler(n) können das lastfreie Schalten unterstützen bzw. vereinfachen. Durch diese Maßnahmen kann auch die Schalteinrichtung einfach und kostengünstig dimensioniert werden.

Eine besondere Ausführungsform wird im Folgenden nochmals zusammengefasst: Zwischen einer Brennstoffzelle (z.B. eines Fahrzeuges) und einer Batterie ist eine DC/DC-Wandlereinrichtung der folgenden Art geschaltet: Die DC/DC-Wandlereinrichtung besteht zwischen Eingang und Ausgang aus parallel geschalteten Untereinheiten, die jeweils für sich einen Gleichspannungswandler darstellen. Ein (als "Pull-Down-Phase" zu bezeichnender) erster Gleichspannungswandler, insbesondere ein Vollbrückenwandler, ist sowohl im Hochsetz- als auch im Tiefsetzmodus betreibbar. Zumindest ein weiterer (zweiter) Wandler, der ausschließlich im Hochsetzmodus betreibbar ist, insbesondere ein Halbbrückenwandler, kann über eine gesonderte Schalteinrichtung zur "Pull-Down-Phase" zuschaltbar sein. Die Erfindung stellt eine auf die Strom-Spannungs-Kennlinie (Polkurve) der Brennstoffzelle optimal angepasste Lösung dar.

Im folgenden werden Ausführungsformen beschrieben, die für spezielle Anwendungen geeignet sind und von der Erfindung mitumfasst sind:
- Die DC/DC-Wandlereinrichtung kann in Form eines 'normalen' DC/DC-Wandlers (mit 4-Polen: 2- poliger Eingang und 2-poliger Ausgang) ausgebildet sein.
- Die DC/DC-Wandlereinrichtung kann in einem Triportwandler (mit 6 Polen) integriert sein. Ein Triportwandler ist mit drei Anschluss-Terminals ausgebildet.
- Die DC/DC-Wandlereinrichtung kann zusätzlich noch weitere Abgänge auf der Eingangs- oder Ausgangsseite haben, welche zum Anschluss von Nebenaggregaten (Turbokompressor-Umrichter, Klimakompressor, etc.) dienen bzw. mit solchen verbunden sind.
- Die Erfindung kann auch eine Komponente betreffen, in der die erfindungsgemäße DC/DC-Wandlereinrichtung eingesetzt wird bzw. integriert ist. Diese Komponente kann noch weitere Funktionen abdecken und weitere Subkomponenten beinhalten. Diese können z.B. sein: Bordnetzwandler (Versorgung von 12V- bzw. 24V- bzw. 48V-Kreis aus dem HV-Kreis); On-Board-Ladegerät zum Laden der HV-Batterie; Traktionsumrichter, welcher den E-Motor für die Fahrzeugtraktion versorgt; PDU (Power Distribution Unit) mit Sicherungen, Schützen, Steuerfunktionen für das Brennstoffzellen-System und/oder den Batteriekreis, sowie diversen HV- und LV-Ausgängen für Nebenaggregate (wie oben erwähnt).

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine Ausführungsform einer erfindungsgemässen DC/DC-Wandlereinrichtung,
- Fig. 2: ein Energieversorgungssystem in einem Brennstoffzellen-Fahrzeug,
- Fig. 3: die Polkurve einer Brennstoffzelleneinheit
- Fig. 4: eine Ausführungsform eines zweiten Gleichspannungswandlers in Form eines Halbbrücken-Wandlers,
- Fig. 5: eine Ausführungsform eines ersten Gleichspannungswandlers in Form eines Vollbrückenwandlers,
- Fig. 6: einen zweiten Gleichspannungswandler (Halbbrücken-Wandler), über den die Pluspole des Ein- und Ausganges permanent, d.h. unabhängig vom Schaltzustand der Schaltelemente, galvanisch verbunden sind,
- Fig. 7: einen ersten Gleichspannungswandler (Vollbrücken-Wandler), über den die Pluspole des Ein- und Ausganges permanent, d.h. unabhängig vom Schaltzustand der Schaltelemente, galvanisch verbunden sind,
- Fig. 8: eine DC/DC-Wandlereinrichtung in schematischer Darstellung mit Steuereinrichtung und Strommesseinrichtungen.

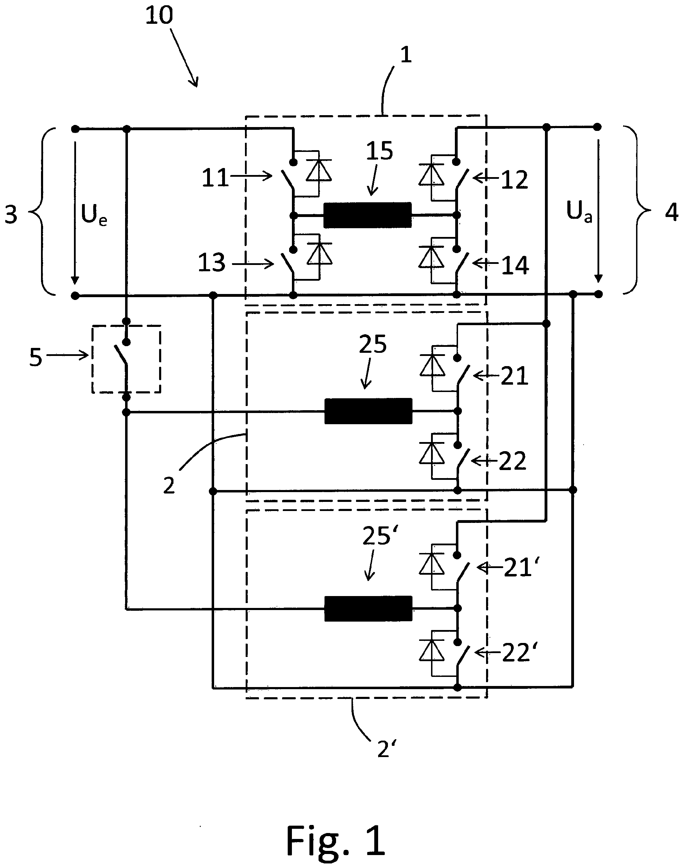

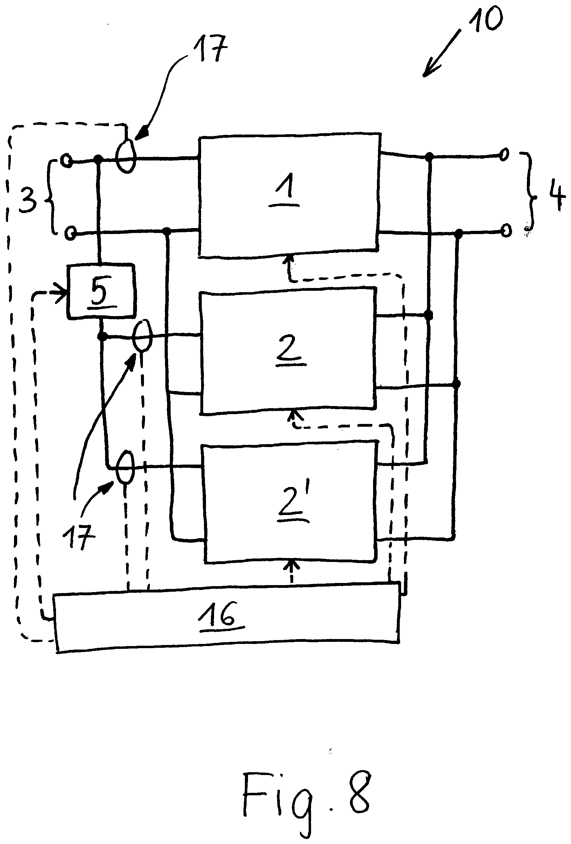

Fig. 1 zeigt eine Mehrphasige (hier: dreiphasige) DC/DC-Wandlereinrichtung 10 mit einem Gleichspannungseingang 3, einem Gleichspannungsausgang 4 und parallel geschalteten Gleichspannungswandlern 1, 2, 2', die jeweils zumindest ein von einer Steuereinrichtung 16 (siehe Fig. 8) gesteuertes Schaltelement 11, 12, 13, 14; 21, 22, 21', 22' aufweisen.

Von den parallel geschalteten Gleichspannungswandlern 1, 2, 2' ist ein erster Gleichspannungswandler 1 in Richtung vom Gleichspannungseingang 3 zum Gleichspannungsausgang 4 hin (gleichzeitig) als Tief- und Hochsetzsteller ausgebildet. An dieser Stelle sei erwähnt, dass auch zwei oder mehrere erste Gleichspannungswandler mit der oben genannten Eigenschaft und zueinander parallel geschaltet vorgesehen sein können.

Zweite Gleichspannungswandler 2, 2' (die jeweils mit dem ersten Gleichspannungswandler 1 parallel geschaltet sind) sind in Richtung vom Gleichspannungseingang 3 zum Gleichspannungsausgang 4 hin als Hochsetzsteller ausgebildet, wobei sich die Topologie des ersten Gleichspannungswandlers 1 von der Topologie der zweiten Gleichspannungswandler 2, 2' unterscheidet. An dieser Stelle sei erwähnt, dass auch nur ein zweiter oder aber auch drei oder mehrere zweite Gleichspannungswandler mit der oben genannten Eigenschaft vorgesehen sein könnte(n).

Die DC/DC-Wandlereinrichtung 10 umfasst zumindest eine, vorzugsweise gesonderte Schalteinrichtung 5 mit
einem ersten Schaltzustand, in dem die zweiten Gleichspannungswandler 2, 2' abgekoppelt sind, sodass eine Spannungswandlung zwischen Gleichspannungseingang 3 und Gleichspannungsausgang 4 durch den ersten Gleichspannungswandler 1 und ohne Beteiligung der zweiten Gleichspannungswandler 2, 2' erfolgt, und
einem zweiten Schaltzustand, in dem die zweiten Gleichspannungswandler 2, 2' zugeschaltet sind, sodass die zweiten Gleichspannungswandler 2, 2' an einer Spannungswandlung zwischen Gleichspannungseingang 3 und Gleichspannungsausgang 4 beteiligt sind, vorzugsweise durch gleichzeitige Beteiligung des ersten Gleichspannungswandlers 1 .

Anders als in Fig. 1 dargestellt könnte auch für jeden zweiten Gleichspannungswandler 2, 2' eine eigene Schalteinrichtung 5 vorgesehen sein, sodass wahlweise nur ein zweiter Gleichspannungswandler 2 oder beide zweiten Gleichspannungswandler 2, 2' zugeschaltet werden können.

Wie aus Fig. 1 zu sehen weisen die zweiten Gleichspannungswandler 2, 2' jeweils eine einfachere Topologie auf als der erste Gleichspannungswandler 1 und haben die zweiten Gleichspannungswandler 2, 2' jeweils weniger (hier: halb so viele) Schaltelemente auf als der erste Gleichspannungswandler 1.

Die zweiten Gleichspannungswandler 2, 2' können aufgrund ihrer "vereinfachten" Topologie in Richtung vom Gleichspannungseingang 3 zum Gleichspannungsausgang 4 hin jeweils nur als Hochsetzsteller betrieben werden. In der dargestellten bevorzugten Ausführungsform ist der erste Gleichspannungswandler 1 als Vollbrücken-Wandler und sind die zweiten Gleichspannungswandler 2, 2' jeweils als Halbbrücken-Wandler ausgebildet.

Der erste Gleichspannungswandler 1 weist hier zumindest vier Schaltelemente 11, 12, 13, 14 auf, die zusammen mit zumindest einer Drossel 15 eine Vollbrückenschaltung bilden, wobei die Drossel 15 den Brückenzweig bildet. Ein zweiter Gleichspannungswandler 2, 2' umfasst zumindest zwei Schaltelemente 21, 22 bzw. 21', 22', die zusammen mit zumindest einer Drossel 25 bzw. 25' eine Halbbrückenschaltung bilden.

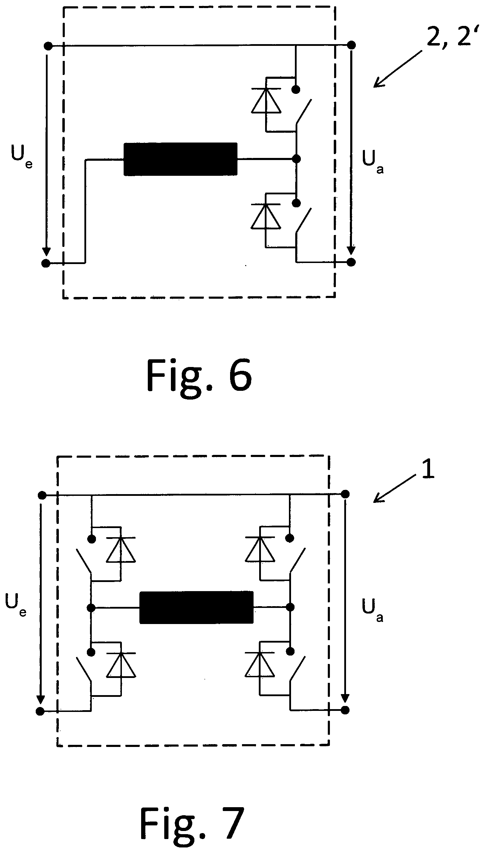

Im Folgenden werden die Eigenschaften des Vollbrückenwandlers näher erläutert (Der Vollbrückenwandler in Fig. 1 ist mit gemeinsamen Minus dargestellt, kann aber auch mit gemeinsamen Plus ausgeführt werden; siehe Fig. 7):
Der Vollbrückenwandler erlaubt den Hochsetzstellbetrieb (Eingangsspannung Uₑ < Ausgangsspannung Uₐ) und den Tiefsetzstellbetrieb (Uₑ > Uₐ). Er ist aus zwei Halbbrücken aufgebaut. Die Schaltelemente 11, 12, 13, 14 können als IGBTs und/oder FETs und/oder Dioden ausgeführt sein. Der Vollbrückenwandler kann, abhängig davon, wie die Schaltelemente ausgeführt sind, bidirektional (Stromfluss in beide Richtungen möglich) oder unidirektional (Stromfluss nur in eine Richtung möglich) ausgeführt sein.

Im Folgenden werden die Eigenschaften des Halbbrückenwandlers näher erläutert (Der Halbbrückenwandler in Fig. 1 ist mit gemeinsamen Minus dargestellt, kann aber auch mit gemeinsamen Plus ausgeführt werden; siehe Fig. 6):

Der Halbbrückenwandler erlaubt nur den Hochsetzstellbetrieb (Eingangsspannung Uₑ < Ausgangsspannung Uₐ). Ein Tiefsetzstellbetrieb (Uₑ > Uₐ) ist nicht möglich. Der Grund dafür ist, dass die Schaltelemente 21, 21 bzw. 21', 22' sind i.d.R. als IGBTs oder FETs ausgeführt sind und eine antiparallele Diode besitzen. Bei einem Halbbrückenwandler mit gemeinsamen Minus (Fig. 1) wäre die Diode des Schaltelementes, die zwischen den Brückenpunkt und dem Pluspol des Ausganges 4 geschaltet ist, dann in Durchlassrichtung gepolt, wenn die Eingangsspannung (Brennstoffzellenspannung) grösser wäre, als die Ausgangsspannung (Batteriespannung). In diesem Fall ergäbe sich ein mit dem Wandler nicht kontrollierbarer Strom. Bei einem Halbbrückenwandler mit gemeinsamen Plus (Fig. 6) wäre die Diode des Schaltelementes, die zwischen den Brückenpunkt und dem Minuspol des Ausganges 4 geschaltet ist, ursächlich für dieses Verhalten.

Wie beim Vollbrückenwandler können die Schaltelemente als IGBTs und/oder FETs und/oder Dioden ausgeführt sein. Der Halbbrückenwandler kann, abhängig davon wie die Schaltelemente ausgeführt sind, bidirektional (Stromfluss in beide Richtungen möglich) oder unidirektional (Stromfluss nur in eine Richtung möglich) ausgeführt sein.

Die Schalteinrichtung 5 ist gesondert, d.h. zusätzlich zu den Gleichspannungswandlern 1, 2, 2' bzw. deren Schaltelementen, vorgesehen. Es ist möglich, dass alle zweiten Gleichspannungswandler an einer gemeinsamen Schalteinrichtung 5 hängen bzw. durch diese zugeschaltet bzw. abgekoppelt werden (wie z.B. in der Fig. 1). Ebenso wäre es aber denkbar, dass jeder zweite Gleichspannungswandler oder jede Gruppe von zweiten Gleichspannungswandler jeweils an einer eigenen Schalteinrichtung zugeordnet sind. Letztere Variante eröffnet die Möglichkeit des Zuschaltens ausgewählter zweiter Gleichspannungswandler.

Im ersten Schaltzustand der Schalteinrichtung 5 sind die zweiten Gleichspannungswandler 2, 2' mit zumindest einem ihrer Pole von dem Gleichspannungseingang 3 (möglich wäre auch: von dem Gleichspannungsausgang 4) und mit zumindest einem ihrer Pole von dem ersten Gleichspannungswandler 1 abgekoppelt. Wie in Fig. 1 zu sehen kann eine einzige Schalteinrichtung 5 zum Abkoppeln bzw. Zuschalten eines bzw. aller zweiten Gleichspannungswandlers 2, 2' vorgesehen sein.

Unabhängig von den Schaltzuständen der Schaltelemente 11, 12, 13, 14; 21, 22, 21', 22' der Gleichspannungswandler 1, 2, 2' ist zwischen einem Pol des Gleichspannungseingangs 3 und dem gleichnamigen Pol des Gleichspannungsausgangs 4 eine galvanische Verbindung ausgebildet. Diese ist frei von induktiven Bauelementen (hier auch: frei von jeglichen aktiven und passiven elektrischen Bauelementen).

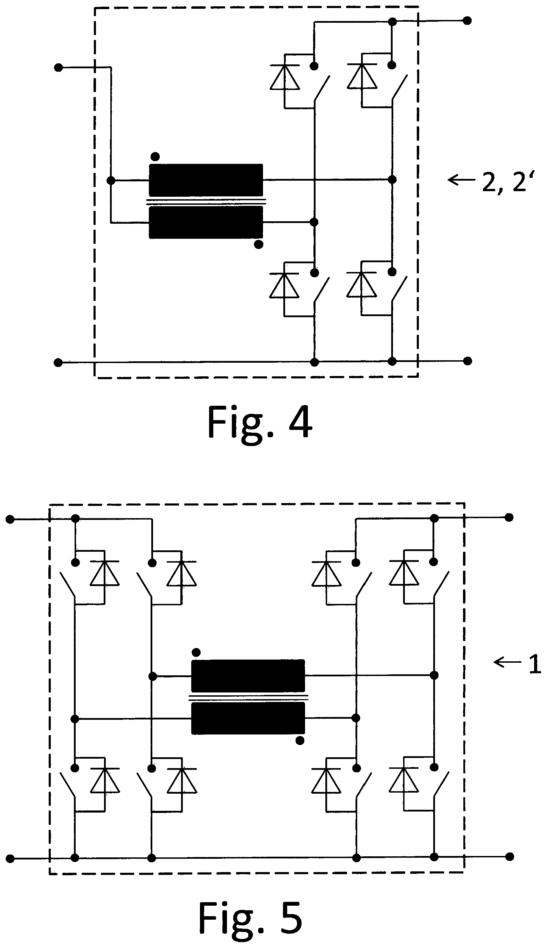

Wie bereits erwähnt können der erste Gleichspannungswandler 1 und/oder der zweite Gleichspannungswandler 2, 2' zumindest ein Halbleiter-Schaltelement, insbesondere einen IGBT oder MOSFET, und zumindest eine Drossel 15, 25, 25' aufweisen. Eine zu Fig. 1 alternative Ausführungsform der Gleichspannungswandler 1, 2, 2' zeigen die Fig. 4 und 5. Hier sind die Gleichspannungswandler 1, 2, 2' jeweils mit transformatorisch gekoppelten Drosseln ausgebildet.

Fig. 8 zeigt, dass die DC/DC-Wandlereinrichtung 10 zumindest eine Strommesseinrichtung 17 (möglich wäre auch: Spannungsmesseinrichtung) umfasst, die mit der Steuereinrichtung 16 verbunden und derart ausgebildet ist, dass die Ansteuerung der Schalteinrichtung 5 in Abhängigkeit der mit der Strommesseinrichtung 17 ermittelten Messwerte erfolgt.

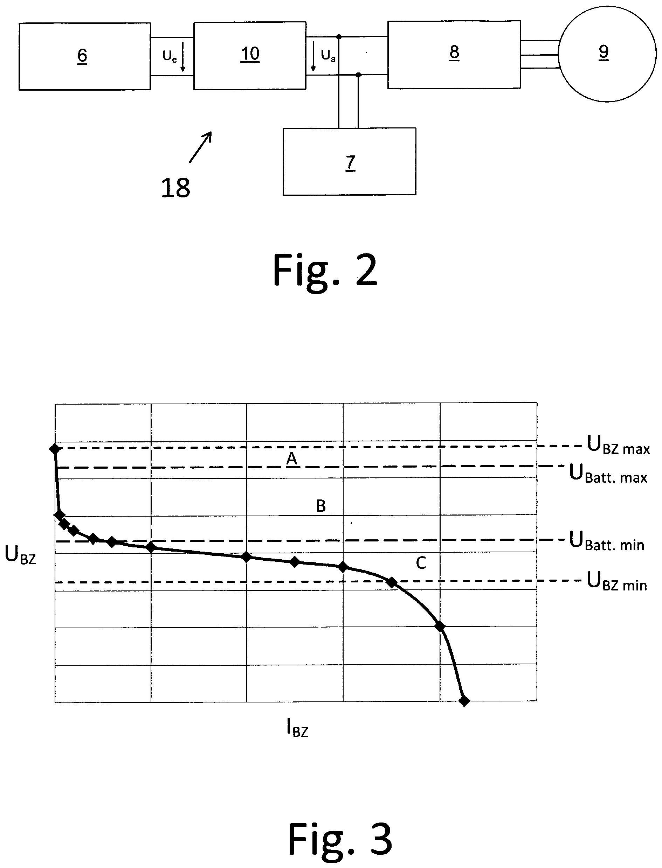

Fig. 2 zeigt ein erfindungsgemäßes Energieübertragungssystem 18 (z.B. eines Fahrzeuges) mit einer elektrischen Energiequelle 6, insbesondere eine Brennstoffzelleneinheit, einem elektrischen Energiespeicher 7, insbesondere eine (Fahrzeug)Batterie, und einer DC/DC-Wandlereinrichtung 10, wobei die elektrische Energiequelle 6 und der elektrische Energiespeicher 7 über die DC/DC-Wandlereinrichtung 10 miteinander elektrisch verbunden sind. Ebenfalls am Ausgang 4 des Gleichspannungswandlers 10 ist ein Wechselrichter 8 angeschlossen, der die Gleichspannung in eine für einen (Fahr)Motor 9 entsprechende Wechselspannung umwandelt.

Anhand Fig. 1 und Fig. 3 wird nun das Verfahren zum Betrieb einer DC/DC-Wandlereinrichtung (bzw. eines Energieübertragungssystems und/oder eines Fahrzeuges) näher erläutert. Auch wenn dieses Beispiel eine Brennstoffzellenanwendung betrifft wird festgehalten, dass die Erfindung auch für andere elektrische Energiequellen geeignet ist, insbesondere für solche, die einen vergleichbaren oder ähnlichen Strom-Spannungsverlauf aufweisen.

Fig. 3 zeigt die Polkurve einer Brennstoffzelleneinheit als elektrischer Energiequelle 6. Die Leerlaufspannung (I_{BZ}=0) liegt im Vergleich zur Spannung der Brennstoffzelleneinheit bei maximaler Leistung sehr hoch (nur als Richtwert gilt hier ein Verhältnis von zumindest 2:1). U_{BZ max} ist maximale Brennstoffzellenspannung, U_{BZ min} ist die minimale Brennstoffzellenspannung, U_{Batt. max} ist die maximale Batteriespannung und U_{Batt. min} ist minimale Batteriespannung In Fig. 3 sind unterschiedliche Arbeitsbereiche A, B und C zu sehen:
Arbeitsbereich A: Da die Brennstoffzellenspannung U_{BZ} größer ist als die Batteriespannung U_{Batt.} ist ein Tiefsetzstellbetrieb notwendig. Die Spannung der Brennstoffzelleneinheit muss auf das Niveau der Batterie heruntergewandelt werden. Dies erfolgt mit dem ersten Gleichspannungswandler 1, während die zweiten Gleichspannungswandler 2, 2' abgekoppelt und somit nicht an der Wandlung beteiligt sind.

Arbeitsbereich B: Hier kann die Brennstoffzellenspannung U_{BZ} kleiner oder größer sein als die Batteriespannung U_{Batt.}. Abhängig vom Arbeitspunkt kann der Hochsetz- oder Tiefsetzstellbetrieb erforderlich sein, um das System zu regeln.

Arbeitsbereich C: Da die Brennstoffzellenspannung U_{BZ} kleiner ist als die Batteriespannung U_{Batt.}, ist ein Hochsetzstellbetrieb notwendig. Die Spannung der Brennstoffzelleneinheit muss auf das Niveau der Batterie hochgewandelt werden. Dies erfolgt bei zugeschalteten zweiten Gleichspannungswandlern 2, 2', die somit an der Wandlung beteiligt sind.

Die DC/DC-Wandlereinrichtung 10 wird somit
- in einem ersten Betriebsmodus betrieben, wenn die am Gleichspannungseingang 3 anliegende Spannung größer ist als die am Gleichspannungsausgang 4 anliegende Spannung, wobei in dem ersten Betriebsmodus der zumindest eine erste Gleichspannungswandler 1 in einem Tiefsetzstellbetrieb gefahren wird und die Schalteinrichtung 5 den ersten Schaltzustand, in dem der zumindest eine zweite Gleichspannungswandler 2, 2' abgekoppelt ist, einnimmt, und
- in einem zweiten Betriebsmodus, wenn die am Gleichspannungseingang 3 anliegende Spannung kleiner ist als die am Gleichspannungsausgang 4 anliegende Spannung, wobei in dem zweiten Betriebsmodus die Schalteinrichtung 5 den zweiten Schaltzustand, in dem der zumindest eine zweite Gleichspannungswandler 2, 2' zugeschaltet ist, einnimmt und vorzugsweise der zumindest eine erste Gleichspannungswandler 1 in einem Hochsetzstellbetrieb gefahren wird.

Für den zweiten Betriebsmodus gibt es nun zwei Varianten:
In einer ersten Variante erfolgt die Spannungswandlung zwischen Gleichspannungseingang 3 und Gleichspannungsausgang 4 unter Beteiligung des zumindest einen ersten Gleichspannungswandlers 1 (Hochsetzstellbetrieb) und des zumindest einen zweiten Gleichspannungswandler 2, 2'.

In einer zweiten Variante erfolgt die Spannungswandlung zwischen Gleichspannungseingang 3 und Gleichspannungsausgang 4 nur durch den oder die zweiten Gleichspannungswandler 2, 2' und ohne Beteiligung des ersten Gleichspannungswandlers 1.

Die erste Variante des zweiten Betriebsmodus kann z.B. (unmittelbar) nach dem Zuschalten des zumindest einen zweiten Gleichspannungswandlers 2, 2' gefahren werden. Nach einer vorgegebenen Zeitspanne oder nach Erreichen eines vorgegebenen Punktes der Strom-Spannungskennlinie der Energiequelle wird/werden der oder die ersten Gleichspannungswandler 1 heruntergefahren, sodass der durch den/die ersten Gleichspannungswandler 1 fließende Strom verringert wird, bis der zumindest eine erste Gleichspannungswandler 1 gänzlich außer Betrieb gesetzt ist (d.h. seine Schaltelemente takten nicht mehr). Gleichzeitig übernimmt der zumindest eine zweite Gleichspannungswandler 2, 2' die freiwerdende Stromlast, indem die Taktung seiner Schaltelemente entsprechend angepasst wird. Nun ist die zweite Variante des zweiten Betriebsmodus realisiert (d.h. ohne Beteiligung des zumindest einen ersten Gleichspannungswandlers 1 an der Spannungswandlung).

Der Wechsel von der ersten Variante zur zweiten Variante kann dann sinnvoll sein, wenn die Verluste durch ein - während des Hochsetzstellbetriebes dauerhaft geschlossenes - Schaltelement (hier Schaltelement 11) des ersten Gleichspannungswandlers 1 größer sind als die Verluste durch die Schalteinrichtung 5. Die zweite Variante des zweiten Betriebsmodus kann auch als 'Hocheffizienzmodus' bezeichnet werden. Er eignet sich insbesondere, wenn mehrere zweite Gleichspannungswandler 2, 2' zur Verfügung stehen bzw. auf die der Strom aufgeteilt werden kann.

Das Zuschalten und/oder Abkoppeln des zumindest einen zweiten Gleichspannungswandlers 2, 2' erfolgt mittels der Schalteinrichtung 5, sobald die am Gleichspannungseingang 3 anliegende Spannung gleich groß oder um einen vorgegebenen Betrag kleiner ist als die am Gleichspannungsausgang 4 anliegende Spannung.

Besonders bevorzugt ist, wenn das Schalten der Schalteinrichtung 5 im Wesentlichen lastfrei erfolgt, indem der durch die Schalteinrichtung 5 fließende Strom durch den zumindest einen zweiten Gleichspannungswandler 2, 2' reguliert wird.

Die Erfindung erlaubt somit insbesondere die DC/DC-Wandlung für überlappende Spannungsbereiche von Energiequelle 6 und Energiespeicher 7. Der erste Gleichspannungswandler 1 (auch Pull-Down-Phase genannt) wird anfangs im Tiefsetzstellbetrieb verwendet. Die Pull-Down-Phase zieht dabei Strom aus der Brennstoffzelle und zieht die Brennstoffzellenspannung nach unten (Pull-Down-Prinzip). Sobald die Spannung der Brennstoffzelle gleich groß oder kleiner ist als die Batteriespannung kann die Schalteinrichtung 5 geschaltet werden, ohne dass ein unkontrollierbarer Strom von der Brennstoffzelle zur Batterie fließt.

Abhängig von der Betriebsstrategie kann eine Hysterese erzeugt werden und die Schalteinrichtung erst geschalten werden, sobald die Brennstoffzellenspannung um eine vorgegeben Differenz ΔU1 kleiner ist als die Batteriespannung.

Sobald die Schalteinrichtung 5 geschaltet ist, können die zweiten Gleichspannungswandler 2, 2' (Halbbrücken-Phasen) im Hochsetzstellbetrieb fungieren und den ersten Gleichspannungswandler 5 (Pull-Down-Phase) unterstützen.

Die Schalteinrichtung 5 muss die zweiten Gleichspannungswandler 2, 2' spätestens dann wegschalten, wenn die Spannung der Energiequelle 6 gleich der Spannung des Energiespeichers 7 ist. Um hier eine Reserve zu berücksichtigen, kann die Schalteinrichtung 5 bereits geöffnet werden, sobald ein minimaler Unterschied ΔU2=U_{Batt} - U_{BZ} erreicht bzw. unterschritten wird.

Um die Schalteinrichtung 5 lastfrei schalten zu können, ist das Regulieren des Stromes durch die Schalteinrichtung 5 durch entsprechende Sollwertvorgabe der beiden zweiten Gleichspannungswandler 2, 2' empfehlenswert.

Bei Ausführung der Phasen (Gleichspannungswandler 1, 2, 2') mit gemeinsamem Minus kann die Schalteinrichtung 5 so ausgeführt sein, dass sie entweder den Pluspol oder auch den Plus- und Minuspol auftrennt. Bei Ausführung der Phasen mit gemeinsamem Plus kann die Schalteinrichtung 5 so ausgeführt sein, dass sie entweder den Minuspol oder den Minus- und Pluspol auftrennt. Bei gemeinsamem Minus besteht auch die Möglichkeit eines beidseitigen Auftrennens von Minusanschlüssen (ein- und ausgangsseitig). Bei gemeinsamem Plus besteht auch die Möglichkeit eines beidseitigen Auftrennens von Plusanschlüssen (ein- und ausgangsseitig).

Die Anzahl an Pull-Down-Phasen und Halbbrücken-Phasen hängen von der Brennstoffzelle, der Batterie und der Leistungsfähigkeit der Phasen ab. Die beschriebene Erfindung beinhaltet aber mindestens eine Pull-Down-Phase (erster Gleichspannungswandler 1) und mindestens einen zweiten Gleichspannungswandler 2, 2' unterschiedlicher Topologie (vorzugsweise eine Halbbrücken-Phase). Die beschriebene Erfindung kann auch durch Phasen erfolgen, deren Hauptdrosseln transformatorisch gekoppelt sind (Fig. 4, 5).

Im Folgenden werden nochmals Vorteile der bevorzugten Ausführungsform genannt: Durch Aufbau der DC/DC-Wandlereinrichtung 10 in Form der beschriebenen Topologie werden lediglich für die Pull-Down-Phase(n) Vollbrücke(n) benötigt, welche parallel zum Gleichspannungseingang 3 (bzw. zur Brennstoffzelleneinheit) geschaltet sind. Die nur im Hochsetzstellbetrieb fahrbaren Gleichspannungswandler 2, 2' können als Halbbrücken-Phasen ausgeführt werden. Dadurch können Halbleiter und deren Ansteuerlogik eingespart werden. Ferner wird der Berechnungsaufwand durch µC, FPGA, CPLD und/oder ASIC verringert. Da die Schalteinrichtung 5 lastfrei geschalten werden kann, kann auch die Verlustleistung herabgesetzt werden. Da die Schalteinrichtung 5 daher nicht wie die Schaltelemente 21, 22 bzw. 21', 22' oder Halbbrücken permanent takten muss, sondern permanent leitend oder nicht leitend ist, kann dieser auch anders ausgelegt werden (günstiger, verlustärmer). Durch die eingesparten Bauteile ergeben sich Vorteile folgender Art: Bauraum, Gewicht, Kosten, Wirkungsgrad.

An dieser Stelle sei erwähnt, dass die gezeigten Schaltbilder als stark vereinfachte Darstellung zu verstehen sind. Kapazitäten auf der Ein- und Ausgangsseite, welche stützende und filternde Aufgaben haben können, sind ebenfalls nicht eingezeichnet. Dabei kann eine Eingangskapazität zwischen den Polen des Gleichspannungseingangs 3 noch vor der Abzweigung zur Schalteinrichtung 5 geschaltet sein. Es wäre jedoch alternativ oder zusätzlich denkbar für jeden Gleichspannungswandler eine eigene Eingangskapazität vorzusehen. Selbiges gilt für die Ausgangskapazität

Ansteuerlogik, welche zur Regulierung der Schaltzeiten der Schaltelemente der Gleichspannungswandler 1, 2, 2' nötig ist, ist in Fig. 8 rein schematisch in Form einer Steuereinheit 16 dargestellt. Alle Wandler-Topologien (Halbbrückenwandler; Vollbrückenwandler; sowie deren Kombination) sind sowohl mit gemeinsamem Minus (wie in Fig. 1 dargestellt), als auch mit gemeinsamem Plus (Fig. 6, 7) ausführbar.

Alle Wandler-Topologien (Halbbrückenwandler; Vollbrückenwandler; sowie deren Kombination) sind sowohl bidirektional (Stromfluss von links nach rechts oder von rechts nach links) aber auch unidirektional (Stromfluss nur von rechts nach links oder aber Stromfluss nur von links nach rechts) darstellbar. Dies kommt auf die Realisierungsvariante der Schaltelemente und deren etwaige Ansteuerung an. Alle Schaltelemente können in Form einer der folgenden Bauelemente auftreten: Diode, IGBT, (MOS)FET, sonstige Halbleiter, oder als Kombination daraus.

Die Schalteinrichtung 5 der Erfindung kann außerdem als einer der folgenden Bauelemente realisiert werden: Bipolartransistor, Tyristor, Triacs, IGBT, IGBT mit antiparalleler Diode, FET, FET mit antiparalleler Diode, MOSFET, Schütz, Relais, und/oder als Kombination daraus. Die Schalteinrichtung 5 kann durch einen Halbleiter, ein Halbleiterrelais oder einen elektromechanischen Schalter gebildet sein.

Die Erfindung ist nicht auf die beschriebene Ausführungsformen und die darin hervorgehobenen Aspekte beschränkt. Vielmehr ist innerhalb des Erfindungsgedankens eine Vielzahl von Abwandlungen möglich, die im Rahmen fachmännischen Handelns liegen. Ebenso ist es möglich, durch Kombination der genannten Mittel und Merkmale weitere Ausführungsvarianten zu realisieren, ohne den Rahmen der Erfindung zu verlassen.

### Bezugszeichenliste

- 1: erster Gleichspannungswandler
- 2, 2': zweiter Gleichspannungswandler
- 3: Gleichspannungseingang
- 4: Gleichspannungsausgang
- 5: Schalteinrichtung
- 6: elektrische Energiequelle
- 7: elektrischer Energiespeicher
- 8: Wechselrichter
- 9: Motor
- 10: DC/DC-Wandlereinrichtung
- 11: Schaltelement
- 12: Schaltelement
- 13: Schaltelement
- 14: Schaltelement
- 15: Drossel
- 16: Steuereinrichtung
- 17: Strommesseinrichtung
- 18: Energieübertragungssystem
- 21, 21': Schaltelement
- 22, 22': Schaltelement
- 25, 25': Drossel
- I_{BZ}: Brennstoffzellenstrom
- U_{BZ}: Brennstoffzellenspannung
- U_{BZ max}: maximale Brennstoffzellenspannung
- U_{BZ min}: minimale Brennstoffzellenspannung
- U_{Batt. max}: maximale Batteriespannung
- U_{Batt. min}: minimale Batteriespannung
- Uₑ: Eingangsspannung
- Uₐ: Ausgangsspannung
- A, B, C: Arbeitsbereiche

## Patentansprüche

1. Mehrphasige DC/DC-Wandlereinrichtung (10) mit einem Gleichspannungseingang (3), einem Gleichspannungsausgang (4) und parallel geschalteten Gleichspannungswandlern (1, 2, 2'), die jeweils zumindest ein von einer Steuereinrichtung (16) gesteuertes Schaltelement (11, 12, 13, 14; 21, 22, 21', 22') aufweisen, **dadurch gekennzeichnet, dass** von den parallel geschalteten Gleichspannungswandlern (1, 2, 2') zumindest ein erster Gleichspannungswandler (1) in Richtung vom Gleichspannungseingang (3) zum Gleichspannungsausgang (4) hin als Tief- und Hochsetzsteller und zumindest ein zweiter Gleichspannungswandler (2, 2') in Richtung vom Gleichspannungseingang (3) zum Gleichspannungsausgang (4) hin als Hochsetzsteller ausgebildet ist, wobei sich die Topologie des zumindest einen ersten Gleichspannungswandlers (1) von der Topologie des zumindest einen zweiten Gleichspannungswandlers (2, 2') unterscheidet, und dass die DC/DC-Wandlereinrichtung (10) zumindest eine, vorzugsweise gesonderte Schalteinrichtung (5) mit
einem ersten Schaltzustand, in dem der zumindest eine zweite Gleichspannungswandler (2, 2') abgekoppelt ist, sodass eine Spannungswandlung zwischen Gleichspannungseingang (3) und Gleichspannungsausgang (4) durch den zumindest einen ersten Gleichspannungswandler (1) und ohne Beteiligung des zumindest einen zweiten Gleichspannungswandlers (2, 2') erfolgt, und
einem zweiten Schaltzustand, in dem der zumindest eine zweite Gleichspannungswandler (2, 2') zugeschaltet ist, sodass der zumindest eine zweite Gleichspannungswandler (2, 2') an einer Spannungswandlung zwischen Gleichspannungseingang (3) und Gleichspannungsausgang (4) beteiligt ist,
umfasst.

2. DC/DC-Wandlereinrichtung nach Anspruch 1, **dadurch gekennzeichnet, dass** der zweite Gleichspannungswandler (2, 2') eine einfachere Topologie aufweist als der erste Gleichspannungswandler (1) und/oder dass der zweite Gleichspannungswandler (2, 2') weniger, vorzugsweise halb so viele, Schaltelemente aufweist als der erste Gleichspannungswandler (1).

3. DC/DC-Wandlereinrichtung nach Anspruch 1 oder 2, **dadurch gekennzeichnet, dass** der zumindest eine zweite Gleichspannungswandler (2, 2') aufgrund seiner Topologie in Richtung vom Gleichspannungseingang (3) zum Gleichspannungsausgang (4) hin nur einen Hochsetzstellbetrieb aufweist.

4. DC/DC-Wandlereinrichtung nach einem der vorhergehenden Ansprüche, **dadurch gekennzeichnet, dass** der zumindest eine erste Gleichspannungswandler (1) ein Vollbrücken-Wandler ist und/oder dass der zumindest eine zweite Gleichspannungswandler (2, 2') ein Halbbrücken-Wandler ist.

5. DC/DC-Wandlereinrichtung nach einem der vorhergehenden Ansprüche, **dadurch gekennzeichnet, dass** im ersten Schaltzustand der Schalteinrichtung der zumindest eine zweite Gleichspannungswandler (2, 2') mit zumindest einem seiner Pole von dem Gleichspannungseingang (3) und/oder dem Gleichspannungsausgang (4) und von dem zumindest einen ersten Gleichspannungswandler (1) abgekoppelt ist.

6. DC/DC-Wandlereinrichtung nach einem der vorhergehenden Ansprüche, **dadurch gekennzeichnet, dass** eine einzige Schalteinrichtung (5) zum Abkoppeln bzw. Zuschalten eines zweiten Gleichspannungswandlers (2, 2') vorgesehen ist.

7. DC/DC-Wandlereinrichtung nach einem der vorhergehenden Ansprüche, **dadurch gekennzeichnet, dass** unabhängig von den Schaltzuständen der Schaltelemente (11, 12, 13, 14; 21, 22, 21', 22') der Gleichspannungswandler (1, 2, 2') zwischen einem Pol des Gleichspannungseingangs (3) und dem gleichnamigen Pol des Gleichspannungsausgangs (4) eine galvanische Verbindung ausgebildet ist, die vorzugsweise frei von induktiven Bauelementen, besonders bevorzugt frei von jeglichen aktiven und passiven elektrischen Bauelementen, ist.

8. DC/DC-Wandlereinrichtung nach einem der vorhergehenden Ansprüche, **dadurch gekennzeichnet, dass** der erste Gleichspannungswandler (1) und/oder der zweite Gleichspannungswandler (2, 2') zumindest ein Halbleiter-Schaltelement, insbesondere einen IGBT oder MOSFET, und zumindest eine Drossel (15, 25, 25') aufweist.

9. DC/DC-Wandlereinrichtung nach einem der vorhergehenden Ansprüche, **dadurch gekennzeichnet, dass** zumindest einer der Gleichspannungswandler (1, 2, 2') transformatorisch gekoppelte Drosseln aufweist.

10. DC/DC-Wandlereinrichtung einem der vorhergehenden Ansprüche, **dadurch gekennzeichnet, dass** die DC/DC-Wandlereinrichtung (10) zumindest eine Strom- und/oder Spannungsmesseinrichtung (17) umfasst, die mit der Steuereinrichtung (16) verbunden und derart ausgebildet ist, dass die Ansteuerung der Schalteinrichtung (5) in Abhängigkeit der mit der Strom- und/oder Spannungsmesseinrichtung (17) ermittelten Messwerte erfolgt.

11. Energieübertragungssystem umfassend eine elektrische Energiequelle (6), insbesondere eine Brennstoffzelleneinheit, einen elektrischen Energiespeicher (7), insbesondere eine Batterie, und eine DC/DC-Wandlereinrichtung (10), wobei die elektrische Energiequelle (6) und der elektrische Energiespeicher (7) über die DC/DC-Wandlereinrichtung (10) miteinander elektrisch verbunden sind, **dadurch gekennzeichnet, dass** die DC/DC-Wandlereinrichtung (10) nach einem der vorhergehenden Ansprüche ausgebildet ist.

12. Fahrzeug, insbesondere Brennstoffzellenfahrzeug, mit einem Energieübertragungssystem nach Anspruch 11.

13. Verfahren zum Betrieb einer DC/DC-Wandlereinrichtung nach einem der Ansprüche 1 bis 10 und/oder eines Energieübertragungssystems nach Anspruch 11 und/oder eines Fahrzeuges nach Anspruch 12, **dadurch gekennzeichnet, dass**
die DC/DC-Wandlereinrichtung (10) in einem ersten Betriebsmodus betrieben wird, wenn die am Gleichspannungseingang (3) anliegende Spannung größer ist als die am Gleichspannungsausgang (4) anliegende Spannung, wobei in dem ersten Betriebsmodus der zumindest eine erste Gleichspannungswandler (1) in einem Tiefsetzstellbetrieb gefahren wird und die Schalteinrichtung (5) den ersten Schaltzustand, in dem der zumindest eine zweite Gleichspannungswandler (2, 2') abgekoppelt ist, einnimmt,
und dass die DC/DC-Wandlereinrichtung (10) in einem zweiten Betriebsmodus betrieben wird, wenn die am Gleichspannungseingang (3) anliegende Spannung kleiner ist als die am Gleichspannungsausgang (4) anliegende Spannung, wobei in dem zweiten Betriebsmodus die Schalteinrichtung (5) den zweiten Schaltzustand, in dem der zumindest eine zweite Gleichspannungswandler (2, 2') zugeschaltet ist, einnimmt und vorzugsweise der zumindest eine erste Gleichspannungswandler (1) in einem Hochsetzstellbetrieb gefahren wird.

14. Verfahren nach Anspruch 13, **dadurch gekennzeichnet, dass** das Zuschalten und/oder Abkoppeln des zumindest einen zweiten Gleichspannungswandlers (2, 2') mittels der Schalteinrichtung (5) erfolgt, sobald die am Gleichspannungseingang (3) anliegende Spannung gleich gross oder um einen vorgegebenen Betrag kleiner ist als die am Gleichspannungsausgang (4) anliegende Spannung.

15. Verfahren nach Anspruch 13 oder 14, **dadurch gekennzeichnet, dass** das Schalten der Schalteinrichtung (5) im Wesentlichen lastfrei erfolgt, indem vorzugsweise der durch die Schalteinrichtung (5) fließende Strom durch den zumindest einen zweiten Gleichspannungswandler (2, 2') reguliert wird.

## Claims

1. A multi-phase DC/DC converter device (10) having a DC voltage input (3), a DC voltage output (4) and parallel connected DC converters (1, 2, 2'), which respectively have at least one switching element (11, 12, 13, 14; 21, 22, 21', 22') controlled by a control device (16), **characterized in that**, from the parallel-connected DC converters (1, 2, 2'), a first DC voltage converter (1) is configured as a step-down and step-up converter in the direction from the DC voltage input (3) to the DC voltage output (4) and a second DC converter (2, 2') is configured as a step-up converter in the direction from the DC voltage input (3) to the DC voltage output (4), wherein the topology of the at least one first DC converter (1) differs from the topology of the at least one second DC converter (2, 2'), and that the DC/DC converter device (10) comprises at least one, preferably separate switching device (5) having a first switching state in which the at least one second DC converter (2, 2') is decoupled, so that a voltage conversion between DC voltage input (3) and DC voltage output (4) takes place through the at least one first DC converter (1) and without engagement of the at least one second DC converter (2, 2'), and a second switching state in which the at least one second DC converter (2, 2') is switched on, so that the at least one second DC converter (2, 2') is engaged in a voltage conversion between DC voltage input (3) and DC voltage output (4).

2. The DC/DC converter device according to claim 1, **characterized in that** the second DC converter (2, 2') has a simpler topology than the first DC converter (1) and/or the second DC converter (2, 2') has fewer, preferable half as many switching elements than the first DC converter (1).

3. The DC/DC converter device according to claim 1 or 2, **characterized in that** the at least one second DC converter (2, 2') due to its topology has only one step-up converter operation in the direction from the DC voltage input (3) to the DC voltage output (4).

4. The DC/DC converter device according to one of the preceding claims, **characterized in that** the at least one first DC converter (1) is a full-bridge converter and/or that the at least one second DC converter (2, 2') is a half-bridge converter.

5. The DC/DC converter device according to one of the preceding claims, **characterized in that** in the first switching state of the switching device, the at least one second DC converter (2, 2') with at least one of its poles is decoupled from the DC voltage input (3) and/or the DC voltage output (4) and from the at least one first DC converter (1).

6. The DC/DC converter device according to one of the preceding claims, **characterized in that** a single switching device (5) is provided for decoupling or switching on a second DC converter (2, 2').

7. The DC/DC converter device according to one of the preceding claims, **characterized in that** a galvanic connection is configured between a pole of the DC voltage input (3) and the corresponding pole of the DC voltage output (4) independent of the switching states of the switching elements (11, 12, 13, 14; 21, 22, 21', 22') of the DC converters (1, 2, 2'), said galvanic connection is preferably free of inductive components, particularly preferably free of any active and passive electrical components.

8. The DC/DC converter device according to one of the preceding claims, **characterized in that** first DC converter (1) and/or the second DC converter (2, 2') has at least one semiconductor switching element, in particular an IGBT or MOSFET, and at least one inductor (15, 25, 25').

9. The DC/DC converter device according to one of the preceding claims, **characterized in that** at least one of the DC converters (1, 2, 2') has transformer-coupled inductors.

10. The DC/DC converter device of one of the preceding claims, **characterized in that** the DC/DC converter device (10) comprises at least one current and/or voltage measuring device (17) which is connected to the control device (16) and is configured in such a way that, the control of the switching device (5) takes place as a function of the measured values determined with the current and/or voltage measuring device (17).

11. An energy transmission system comprising an electrical energy source (6), in particular a fuel cell unit (7), an electrical energy store (7), in particular a battery, and a DC/DC converter device (10), wherein the electrical energy source (6) and the electrical energy store (7) are electrically connected to each other via the DC/DC converter device (10), **characterized in that** the DC/DC converter device (10) is configured according to one of the preceding claims.

12. A vehicle, in particular fuel cell vehicle, having an energy transmission system according to claim 11.

13. A method for operating a DC/DC converter device according to one of claims 1 to 10 and/or of an energy transmission system according to claim 11 and/or of a vehicle according to claim 12, **characterized in that** the DC/DC converter device (10) is operated in a first operating mode when the voltage applied to the DC voltage input (3) is greater then the voltage applied to the DC voltage output (4), wherein in the first operating mode the at least one first DC converter (1) is driven in a step-down conversion mode and the switching device (5) takes up the first switching state, in which the at least one second DC converter (2, 2') is decoupled, and that the DC/DC converter device (10) is operated in a second operating mode when the voltage applied to the DC voltage input (3) is less than the voltage applied to the DC voltage output (4), wherein in the second operating mode the switching device (5) takes up the second switching state, in which the at least one second DC converter (2, 2') is switched on, and preferably the at least one first DC converter (1) is driven in a step-up conversion mode.

14. The method according to claim 13, **characterized in that** the switching-on and/or decoupling of the at least one second DC converter (2, 2') takes place by means of the switching device (5) as soon as the voltage applied to the DC voltage input (3) is equally large or smaller by a specified magnitude than the voltage applied to the DC voltage output (4).

15. The method according to claim 13 or 14, **characterized in that** the switching of the switching device (5) takes place essentially without load, in which preferably the current flowing through the switching device (5) is regulated by the at least one second DC converter (2, 2').

## Revendications

1. Dispositif convertisseur CC/CC multiphasé (10) comportant une entrée de tension continue (3), une sortie de tension continue (4) et des convertisseurs de tension continue branchés en parallèle (1, 2, 2'), qui présentent respectivement au moins un élément de commutation (11, 12, 13, 14 ; 21, 22, 21', 22') commandé par un dispositif de commande (16), **caractérisé en ce que** des deux convertisseurs à tension continue branchés en parallèle (1, 2, 2') au moins un premier convertisseur à tension continue (1) est conçu dans la direction allant de l'entrée de tension continue (3) à la sortie de tension continue (4) comme un convertisseur élévateur et abaisseur et au moins un deuxième convertisseur à tension continue (2, 2') est conçu dans la direction allant de l'entrée de tension continue (3) à la sortie de tension continue (4) comme un convertisseur élévateur, dans lequel la topologie d'au moins un premier convertisseur à tension continue (1) se différencie de la topologie d'au moins un deuxième convertisseur à tension continue (2, 2') et **en ce que** le dispositif convertisseur CC/CC (10) comprend au moins un dispositif de commutation (5), de préférence particulier avec
un premier état de commutation, dans lequel au moins un deuxième convertisseur à tension continue (2, 2') est découplé, de sorte qu'une commutation de tension entre l'entrée de tension continue (3) et la sortie de tension continue (4) ait lieu par l'intermédiaire d'au moins un premier convertisseur à tension continue (1) et sans implication d'au moins un deuxième convertisseur à tension continue (2, 2'), et
un deuxième état de commutation, dans lequel au moins un deuxième convertisseur à tension continue (2, 2') est branché, de sorte qu'au moins un deuxième convertisseur à tension continue (2, 2') participe à une conversion de tension entre une entrée de tension continue (3) et une sortie de tension continue (4).

2. Dispositif convertisseur CC/CC selon la revendication 1, **caractérisé en ce que** le deuxième convertisseur à tension continue (2, 2') présente une topologie plus simple que le premier convertisseur à tension continue (1) et/ou **en ce que** le deuxième convertisseur à tension continue (2, 2') présente moins, de préférence moitié moins d'éléments de commutation que le premier convertisseur à tension continue (1).

3. Dispositif convertisseur CC/CC selon la revendication 1 ou 2, **caractérisé en ce que** au moins un deuxième convertisseur à tension continue (2, 2') présente en raison de sa topologie dans la direction allant de l'entrée à tension continue (3) à la sortie à tension continue (4) seulement une fonctionnement de convertisseur élévateur

4. Dispositif convertisseur CC/CC selon une des revendications précédentes, **caractérisé en ce que** au moins un premier convertisseur à tension continue (1) est un convertisseur en pont et/ou **en ce que** au moins un deuxième convertisseur à tension continue (2, 2') est un convertisseur en demi-pont.

5. Dispositif convertisseur CC/CC selon une des revendications précédentes, **caractérisé en ce que** dans le premier état de commutation du dispositif de commutation, au moins un deuxième convertisseur à tension continue (2, 2') est découplé par au moins un de ses pôles de l'entrée à tension continue (3) et/ou de la sortie à tension continue (4) et d'au moins un premier convertisseur à tension continue (1).

6. Dispositif convertisseur CC/CC selon une des revendications précédentes, **caractérisé en ce que** un dispositif de commutation unique (5) pour découpler, resp. raccorder un deuxième convertisseur à tension continue (2, 2') est prévu.

7. Dispositif convertisseur CC/CC selon une des revendications précédentes, **caractérisé en ce que** indépendamment des états de commutation des éléments de commutation (11, 12, 13, 14 ; 21, 22, 21', 22') du convertisseur à tension continue (1, 2, 2') entre un pôle de l'entrée à tension continue (3) et le pôle homonyme de la sortie à tension continue (4) une liaison galvanique est réalisée, qui est de préférence exempte de composants inductifs, notamment de préférence exempte de tous composants électriques actifs et passifs.

8. Dispositif convertisseur CC/CC selon une des revendications précédentes, **caractérisé en ce que** le premier convertisseur à tension continue (1) et/ou le deuxième convertisseur à tension continue (2, 2') présente au moins un élément de commutation à semiconducteur, notamment un IGBT ou MOSFET, et au moins un étranglement (15, 25, 25').

9. Dispositif convertisseur CC/CC selon une des revendications précédentes, **caractérisé en ce que** au moins un des convertisseurs à tension continue (1, 2, 2') présente des étranglements couplés par transformateur.

10. Dispositif convertisseur CC/CC selon une des revendications précédentes, **caractérisé en ce que** le dispositif convertisseur CC/CC (10) comprend au moins un dispositif de mesure de courant et/ou tension (17), qui est relié avec le dispositif de commande (16) et conçu de telle sorte que la commande du circuit de commutation (5) ait lieu en fonction des valeurs de mesure déterminées par le dispositif de mesure de courant et/ou tension (17).

11. Système de transfert d'énergie comprenant une source d'énergie électrique (6), notamment une unité de cellule combustible (7) un accumulateur d'énergie électrique (7), notamment une batterie et un dispositif convertisseur CC/CC (10), dans lequel la source d'énergie électrique (6) et l'accumulateur d'énergie électrique (7) sont reliés électriquement par l'intermédiaire du dispositif convertisseur CC/CC (10), **caractérisé en ce que** le dispositif convertisseur CC/CC (10) est conçu selon une des revendications précédentes.

12. Véhicule, notamment véhicule à cellule combustible, comportant un système de transfert d'énergie selon la revendication 11.

13. Procédé de fonctionnement d'un dispositif convertisseur CC/CC selon une des revendications 1 à 10 et/ou d'un système de transfert d'énergie selon la revendication 11 et/ou d'un véhicule selon la revendication 12, **caractérisé en ce que**
le dispositif convertisseur CC/CC (10) est exploité dans un premier mode de fonctionnement, quand la tension présente au niveau de l'entrée de tension continue (3) est plus grande que la tension présente au niveau de la sortie de tension continue (4), dans lequel dans le premier mode de fonctionnement, au moins un premier convertisseur à tension continue (1) est amené en fonctionnement de convertisseur-élévateur et le dispositif de commutation (5) adopte le premier état de commutation, dans lequel au moins un deuxième convertisseur à tension continue (2, 2') est découplé,
et **en ce que** le dispositif convertisseur CC/CC (10) est exploité dans un deuxième mode de fonctionnement, lorsque la tension présente au niveau de l'entrée de tension continue (3) est plus petite que la tension présente au niveau de la sortie de tension continue (4), dans lequel dans le deuxième mode de fonctionnement, le dispositif de commutation (5) adopte le deuxième état de commutation, dans lequel au moins un deuxième convertisseur à tension continue (2, 2') est raccordé, et de préférence au moins un premier convertisseur à tension continue (1) est amené dans un fonctionnement de convertisseur-élévateur.

14. Procédé selon la revendication 13, **caractérisé en ce que** le raccordement et/ou le découplage d'au moins un deuxième convertisseur à tension continue (2, 2') a lieu au moyen du dispositif de commutation (5), dès que la tension présente au niveau de l'entrée de tension continue (3) est identique ou inférieure dans une proportion prescrite à la tension présente au niveau de la sortie de tension continue (4).

15. Procédé selon la revendication 13 ou 14, **caractérisé en ce que** le branchement du dispositif de commutation (5) a lieu essentiellement sans charge, en régulant de préférence le courant circulant à travers le dispositif de commutation (5) par l'intermédiaire d'au moins un deuxième convertisseur à tension continue (2, 2').
